# EUROPEAN PATENT APPLICATION

(11) **EP 2 752 967 A1**
(43) Date of publication of application: **09.07.2014**
(21) Application number: 12828100.3
(22) Date of filing: 29.06.2012
(51) Int. Cl.: H02J 7/04, H01M 10/44, H02J 3/32, H02J 7/00, B60L 11/18

(54) **CHARGING SYSTEM, CHARGING DEVICE, AND CHARGING METHOD**

(30) Priority: 29.08.2011 JP 2011186005
(71) Applicant: Kabushiki Kaisha Toshiba, Minato-ku Tokyo 105-8001 (JP)
(72) Inventor: HAYASHI, Hideki, 105-8001 Tokyo (JP); MARUYAMA, Ryoji, 105-8001 Tokyo (JP); EBATA, Yoshio, 105-8001 Tokyo (JP)
(74) Representative: HOFFMANN EITLE
(86) International application number: PCT/JP2012/004238
(87) International publication number: WO 2013/031073

(57) **Abstract**

To provide a charging system, a charging apparatus, and a charging method with which charging can be controlled according to a condition of an industrial power supply.

According to an embodiment of the present disclosure, there is provided a charging system connected to a power system (900) and a storage battery unit (921), including: a charging apparatus (130) that charges the storage battery unit (921); a measurement unit (110) that measures at least one piece of information on a current, a voltage, and a harmonic wave of the power system (900); and a control apparatus (120) that transmits to the charging apparatus (130), according to the at least one information measured by the measurement unit(110), a command for controlling charging with respect to the storage battery unit (921).

## Description

### CROSS-REFERENCE TO RELATED APPLICATIONS

This application is based upon and claims the benefit of priority from the prior Japanese Patent Application No. 2011-186005, filed on August 29, 2011, the entire contents of which are incorporated herein by reference.

### FIELD

The present disclosure relates to a charging system, a charging apparatus, and a charging method for charging a storage battery mounted on, for example, an electric vehicle.

### BACKGROUND

In recent years, electric vehicles have prevailed, and rechargeable batteries are mounted on the electric vehicles. Charging equipment for charging the rechargeable batteries is prepared in, in addition to a charging station as in a gas station of the related art, a convenience store and a shopping mall.

In a case where a charging current is fairly large, however, it is necessary to cause the convenience store that has signed up for a current contract of, for example, 120 A with an electric power company to increase a contract current to, for example, 150 A, thus leading to a raise in a basic charge for electricity. A raise in charging fees of electric vehicles strangles a financial situation of the convenience store and the like.

Moreover, as a charging apparatus, there is a technique disclosed in Patent Document 1 below, for example. In the charging apparatus, a storage battery for equipment is always charged by low-current DC (direct current) power obtained from AC (alternate current) power using a rectifier and a charger. When a charging request is received from an electric vehicle, the storage battery of the electric vehicle and the like is rapidly charged by large-current DC power obtained from the storage battery using the charger. Therefore, the storage battery can be charged during nighttime and the like. Here, regarding such a technique, the following document is cited, and the entire content thereof is incorporated herein by citation.

### RELATED ART DOCUMENT

Patent Document 1: Japanese Patent Application Laid-open No. Hei 5-207668

### BRIEF DESCRIPTION OF THE DRAWINGS

Fig. 1 is a block diagram showing a structure of an electric vehicle charging system according to a first embodiment;
Fig. 2 is a block diagram showing a structure of a control apparatus of the electric vehicle charging system according to the first embodiment;

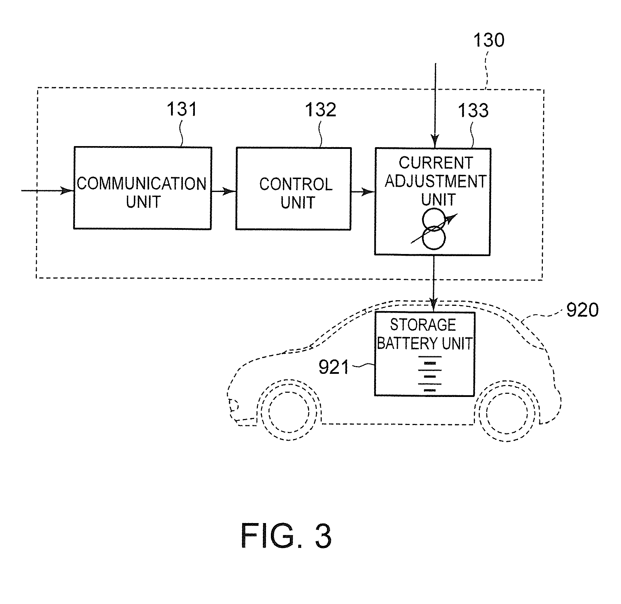

Fig. 3 is a block diagram showing a structure of a charging apparatus of the electric vehicle charging system according to the first embodiment;
Fig. 4 is a flowchart showing charging processing executed by a control unit of the control apparatus of the electric vehicle charging system according to the first embodiment;
Fig. 5 is a block diagram showing a structure of an electric vehicle charging system according to a second embodiment;
Fig. 6 is a block diagram showing a structure of a control apparatus of the electric vehicle charging system according to the second embodiment;
Figs. 7 are each a block diagram showing a structure of an electric storage apparatus of the electric vehicle charging system according to the second embodiment;
Fig. 8 is a flowchart showing charging processing executed by a control unit of the control apparatus of the electric vehicle charging system according to the second embodiment;
Fig. 9 is a block diagram showing a structure of an electric vehicle charging system according to a third embodiment;
Fig. 10 is a flowchart showing charging processing executed by a control unit of a control apparatus of the electric vehicle charging system according to the third embodiment;
Fig. 11 is a block diagram showing a structure of an electric vehicle charging system according to a fourth embodiment;
Fig. 12 is a flowchart showing charging processing executed by a control unit of a control apparatus of the electric vehicle charging system according to the fourth embodiment;
Fig. 13 is a block diagram showing a structure of an electric vehicle charging system according to a fifth embodiment; and
Fig. 14 is a flowchart showing charging processing executed by a control unit of a control apparatus of the electric vehicle charging system according to the fifth embodiment.

### DETAILED DESCRIPTION

In the charging apparatus disclosed in Patent Document 1, however, it has been difficult to control incoming power in accordance with commercial power (system) situations. For example, in a case where a charging current to an electric vehicle is large and exceeds a contract current of a consumer, the consumer needs to raise the contract current with the electric power company, with the result that a basic charge of power charges is raised, and charging costs with respect to the electric vehicle are also raised.

Moreover, in the charging apparatus disclosed in Patent Document 1, it has been difficult to control incoming power based on a power quality of a commercial system.

In view of the circumstances as described above, according to an embodiment of the present disclosure, there is provided a charging system connected to a power system and a storage battery unit, including: a charging apparatus that charges the storage battery unit; a measurement unit that measures at least one piece of information on a current, a voltage, and a harmonic wave of the power system; and a control apparatus that transmits to the charging apparatus, according to the at least one information measured by the measurement unit, a command for controlling charging with respect to the storage battery unit.

According to the charging system, the charging apparatus, and the charging method of this embodiment, charging can be controlled in accordance with commercial system situations.

Hereinafter, embodiments of the charging system, the charging apparatus, and the charging method will be specifically described with reference to the drawings. In the following embodiments, a case where the charging system, the charging apparatus, and the charging method are applied to, for example, an electric vehicle will be described. It should be noted that instead of an electric vehicle, other loads onto which a storage battery is mounted may be used.

### (First embodiment)

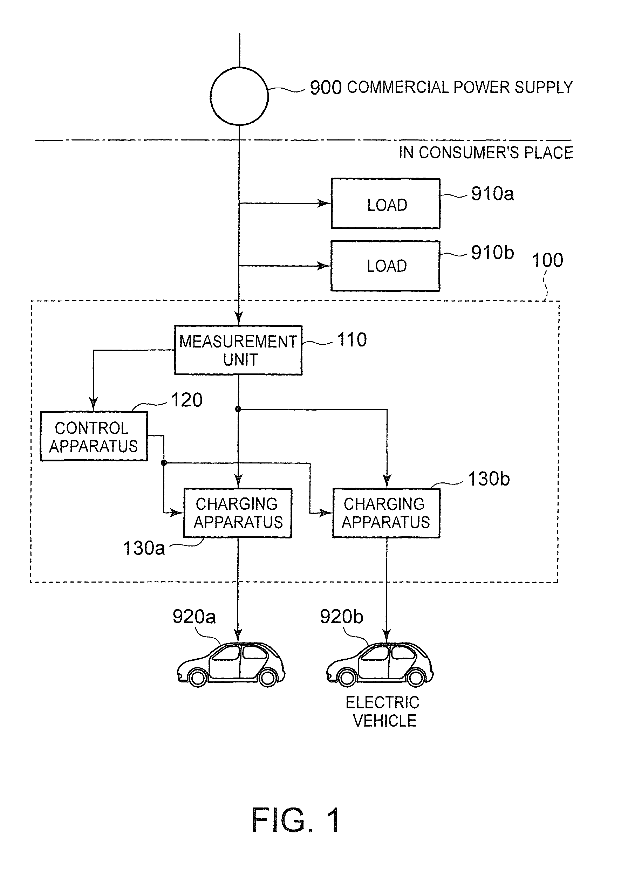

Fig. 1 is a block diagram showing a structure of an electric vehicle charging system according to a first embodiment. In the electric vehicle charging system, a charging system 100, a commercial power supply 900, loads 910a and 910b, and electric vehicles 920a and 920b are connected by power lines, and power is supplied from the commercial power supply (commercial system) 900 to the loads 910a and 910b, the charging system 100, and the electric vehicles 920a and 920b. In Fig. 1, bold solid lines indicate power supply paths, and thin solid lines indicate signal paths.

The charging system 100 includes a measurement unit 110, a control apparatus 120, and charging apparatuses 130a and 130b. The constituent elements may be provided in different apparatuses as a charging system or may be provided in the same apparatus. The charging system 100 is provided at a consumer's place such as a convenience store and a shopping mall.

The commercial power supply 900 supplies AC power of 100 V, 6600 V, or the like to the loads 910a and 910b, the charging system 100, and the electric vehicles 920a and 920b. The loads 910a and 910b are loads of the consumer's place which are, for example, illumination equipment and a refrigerator in the case of a convenience store.

With power from the commercial power supply 900, the measurement unit 110 measures an abnormal waveform of a current, voltage, frequency, harmonic wave of a voltage waveform, and the like that are supplied to the charging apparatuses 130a and 130b and a ratio of the harmonic wave with respect to the basic wave, power, and a power amount and transmits the measured data to the control apparatus 120.

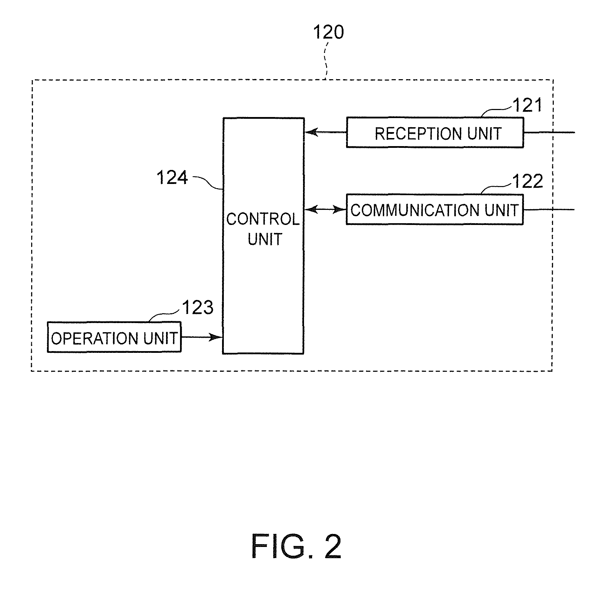

The control apparatus 120 is constituted of a personal computer, a minicomputer, and a dedicated apparatus and controls charging with respect to the charging apparatuses 130a and 130b based on the data from the measurement unit 110. Fig. 2 is a block diagram showing a structure of the control apparatus of the electric vehicle charging system according to the first embodiment. The control apparatus 120 includes a reception unit 121, a communication unit 122, an operation unit 123, and a control unit 124.

The reception unit 121 receives the data from the measurement unit 110. The communication unit 122 transmits commands to the charging apparatuses 130a and 130b. The operation unit 123 is constituted of a switch and a liquid crystal panel and is used to input, as preset values, an electricity charge of each time slot and a consumer's contract current such as a current value usable for charging, that is, a current value that is based on a relationship with the consumer's contract current, a voltage lower limit value to which a voltage is allowed to fall, and an allowable size of a harmonic wave. The control unit 124 controls the reception unit 121, the communication unit 122, and the operation unit 123.

The charging apparatuses 130a and 130b are provided in correspondence with the electric vehicles 920a and 920b and charge a storage battery unit 921 in each of the electric vehicles 920a and 920b using power from the power lines. The charging may be controlled by the control apparatus 120. The charging apparatuses 130a and 130b each include a communication unit 131, a control unit 132, and a current adjustment unit 133.

The communication unit 131 receives commands transmitted from the communication unit 122 of the control apparatus 120. The control unit 132 controls the current adjustment unit 133 to adjust a charging current to an appropriate current for reducing it based on the command from the communication unit 131. The current adjustment unit 133 converts the power supplied from the commercial power supply 900 (AC or DC; converts AC into DC in the case of AC power) into a charging current and charges the storage battery unit 921 of each of the electric vehicles 920a and 920b. The charging current is controlled by the control unit 132.

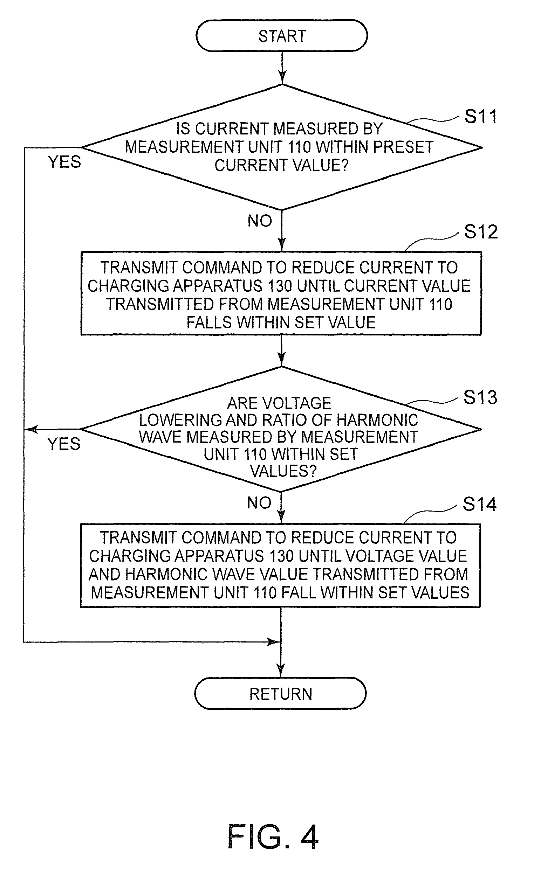

Next, an operation of the electric vehicle charging system structured as described above will be described. In the following descriptions, an operation of the control unit 124 of the control apparatus 120 will mainly be described. Fig. 4 is a flowchart showing charging processing executed by the control unit 124 of the control apparatus 120 of the electric vehicle charging system.

First, a current, a voltage, a ratio of a harmonic wave with respect to a basic wave, and the like supplied from the commercial power supply 900 are measured by the measurement unit 110. Subsequently, the current measured by the measurement unit 110 is checked as to whether it is within a preset current value (Step S11). When the measured current is not within the preset current value, a command to reduce an output current of the current adjustment unit 133 is transmitted to the charging apparatus 130 until the current value transmitted from the measurement unit 110 falls within the set value (Step S12).

Next, lowering of the voltage and the ratio of the harmonic wave with respect to the basic wave that have been measured by the measurement unit 110 are checked as to whether they are within set values (Step S13). When the voltage lowering and the ratio of the harmonic wave with respect to the basic wave are not within the set values, a command to reduce the output current of the current adjustment unit 133 is transmitted to the charging apparatus 130 until the voltage value and the ratio of the harmonic wave with respect to the basic wave transmitted from the measurement unit 110 fall within the set values (Step S14).

It should be noted that it is also possible to schedule the power supply so that a large current is supplied in a time slot where the electricity charge is inexpensive and a small current is supplied in a time slot where the electricity charge is expensive and transmit the schedule information to the charging apparatus 130 so as to control the charging with respect to the electric vehicles 920a and 920b.

As described above, according to the electric vehicle charging system of the first embodiment, since at least one of the current, voltage, and harmonic wave of the commercial power supply 900 is measured by the measurement unit 110 and the control unit 124 of the control apparatus 120 transmits to the charging apparatus 130 a command for controlling charging with respect to the storage battery unit 921 based on at least one piece of information on the current, voltage, and harmonic wave of the commercial power supply 900 measured by the measurement unit 110, charging with respect to the storage battery unit 921 of each of the electric vehicles 920a and 920b can be controlled appropriately.

### (Second embodiment)

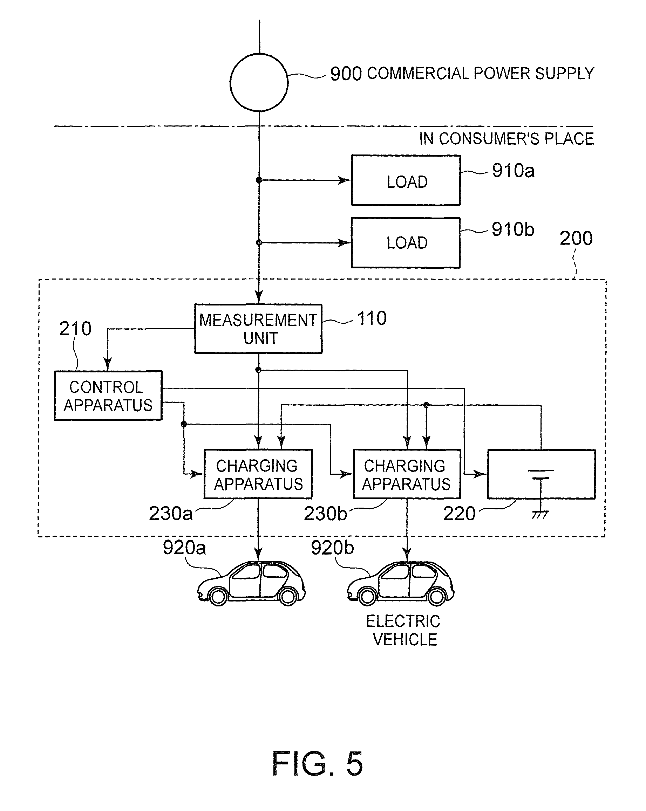

Fig. 5 is a block diagram showing a structure of an electric vehicle charging system according to a second embodiment. An electric vehicle charging system 200 of the second embodiment shown in Fig. 5 includes, in addition to those of the electric vehicle charging system 100 of the first embodiment shown in Fig. 1, an electric storage apparatus 220, a control apparatus 210 in place of the control apparatus 120, and charging apparatuses 230a and 230b in place of the charging apparatuses 130a and 130b.

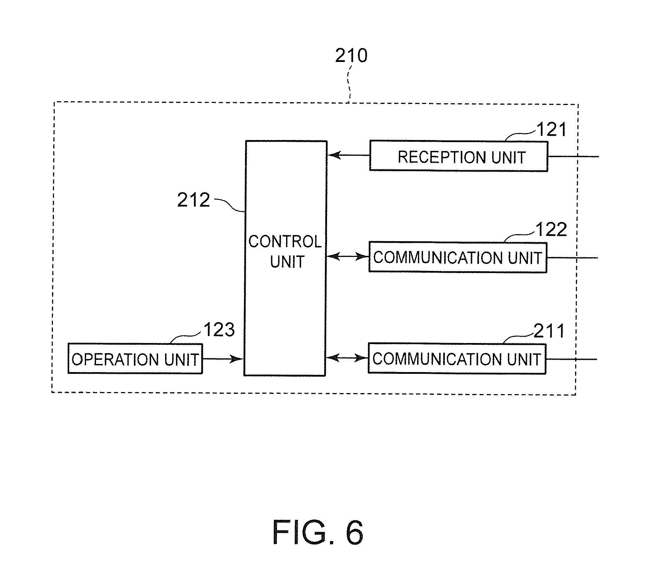

The control apparatus 210 has a structure in which a communication unit 211 is added to the structure of the control apparatus 120 as shown in Fig. 6. The communication unit 211 transmits to the electric storage apparatus 220 a command to instruct a discharge amount. Specifically, the communication unit 211 transmits a command to supply a current from the electric storage apparatus 220 to the charging apparatuses 230a and 230b.

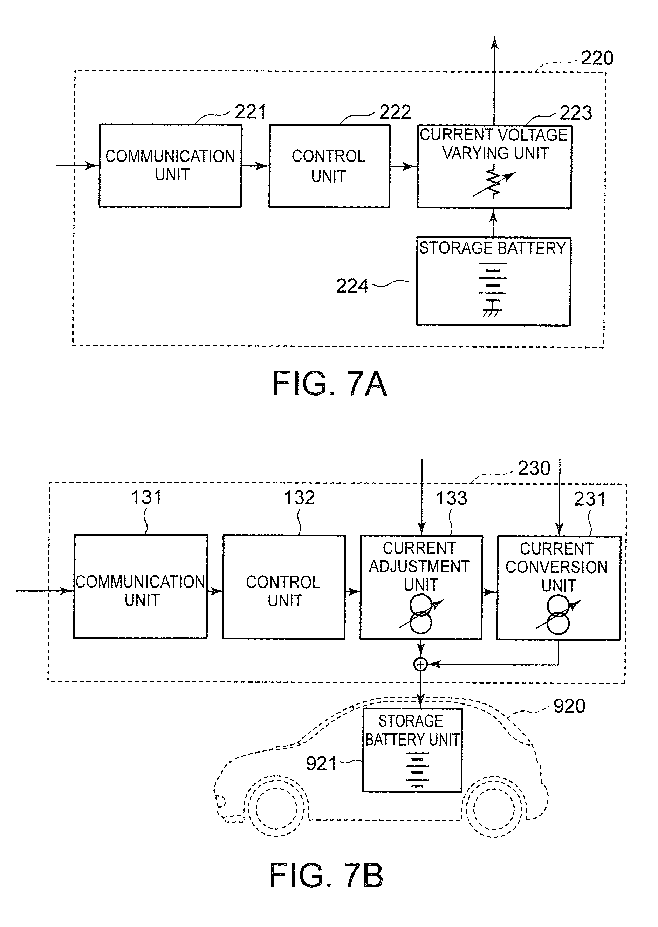

Fig. 7A is a block diagram showing a structure of the electric storage apparatus 220 of the electric vehicle charging system according to the second embodiment, and Fig. 7B is a block diagram showing a structure of the charging apparatus 230 of the electric vehicle charging system according to the second embodiment. The electric storage apparatus 220 is charged by AC or DC power supplied from the commercial power supply 900 when a power usage by the loads 910a and 910b and the charging apparatuses 230a and 230b is small. The electric storage apparatus 220 supplies charging power to the charging apparatuses 230a and 230b and includes a communication unit 221, a control unit 222, a current voltage varying unit 223, and a storage battery 224.

The communication unit 221 receives the command that instructs a discharge amount, which is transmitted from the communication unit 211 of the control apparatus 210. Based on the command that instructs a discharge amount from the communication unit 221, the control unit 222 controls a current value and voltage value of the current voltage varying unit 223. The current voltage varying unit 223 varies an output current and output voltage of the storage battery 224 based on the information from the control unit 222.

The charging apparatuses 230a and 230b are provided in correspondence with the electric vehicles 920a and 920b and each include the communication unit 131, the control unit 132, the current adjustment unit 133, and a current conversion unit 231 as shown in Fig. 7B.

The storage battery unit 921 provided in each of the electric vehicles 920a and 920b is charged by a current obtained by adding a current supplied from the commercial power supply 900 via the current adjustment unit 133 and a current supplied from the electric storage apparatus 220 via the current conversion unit 231.

The communication unit 131 receives a command transmitted from the communication unit 122 of the control apparatus 210. The control unit 132 controls the current adjustment unit 133 to adjust the current supplied from the commercial power supply 900 to an appropriate current for reducing it based on the command from the communication unit 131. The current adjustment unit 133 converts the power supplied from the commercial power supply 900 (AC or DC; converts AC into DC in the case of AC power) into a charging current and outputs it. The output current is controlled by the control unit 132.

The current conversion unit 231 converts the current supplied from the electric storage apparatus 220 into a charging current of the storage battery unit 921 of the electric vehicle 920 and outputs it. It should be noted that when the electric storage apparatus 220 outputs AC power, a conversion is made from AC to DC for output.

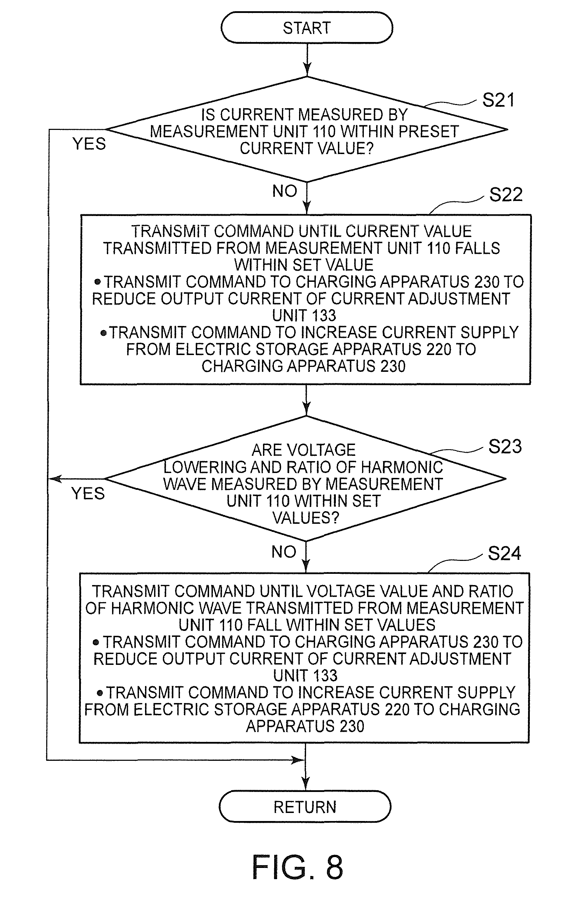

Next, an operation of the electric vehicle charging system structured as described above will be described. In the following descriptions, an operation of a control unit 212 of the control apparatus 210 will mainly be described. Fig. 8 is a flowchart showing charging processing executed by the control unit of the control apparatus of the electric vehicle charging system.

First, a current, a voltage, a ratio of a harmonic wave with respect to a basic wave, and the like supplied from the commercial power supply 900 are measured by the measurement unit 110. Subsequently, the current measured by the measurement unit 110 is checked as to whether it is within a preset current value (Step S21). When the measured current is not within the preset current value, a command to reduce an output current of the current adjustment unit 133 is transmitted to the charging apparatus 230, and a command to increase a current supply to the charging apparatus 230 is transmitted to the electric storage apparatus 220 until the current value transmitted from the measurement unit 110 falls within the set value (Step S22).

Next, lowering of the voltage and the ratio of the harmonic wave with respect to the basic wave that have been measured by the measurement unit 110 are checked as to whether they are within set values (Step S23). When the voltage lowering and the ratio of the harmonic wave with respect to the basic wave are not within the set values, a command to reduce the output current of the current adjustment unit 133 is transmitted to the charging apparatus 230, and a command to increase the current supply to the charging apparatus 230 is transmitted to the electric storage apparatus 220 until the voltage value and the ratio of the harmonic wave with respect to the basic wave transmitted from the measurement unit 110 fall within the set values (Step S24).

It should be noted that charging with respect to the electric vehicles 920a and 920b may be controlled using a current from the commercial power supply 900 in a time slot where the electricity charge is inexpensive. In addition, charging with respect to the electric vehicles 920a and 920b may be controlled by controlling at least one of processing for reducing a charging current and processing that uses a larger amount of current from the electric storage apparatus 220 in a time slot where the electricity charge is expensive.

As described above, according to the electric vehicle charging system of the second embodiment, since the current from the electric storage apparatus 220 can be supplied to the charging apparatuses 230a and 230b, the voltage lowering and the ratio of the harmonic wave with respect to the basic wave become smaller.

### (Third embodiment)

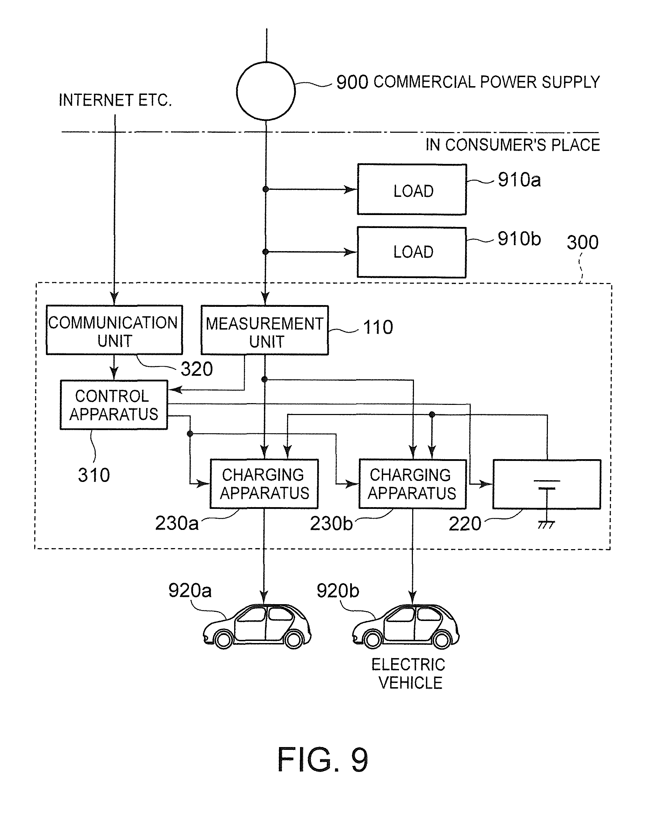

Fig. 9 is a block diagram showing a structure of an electric vehicle charging system according to a third embodiment. An electric vehicle charging system 300 of the third embodiment shown in Fig. 9 includes, in addition to those of the electric vehicle charging system 200 of the second embodiment shown in Fig. 5, a communication unit 320 and a control apparatus 310 that receives data from the communication unit 320. It should be noted that the control apparatus 310 is different from the control apparatus 210 of the second embodiment only in a program and in that the control apparatus 310 includes an interface circuit with respect to the communication unit 320, and other structures are the same. Therefore, respective units of the control apparatus 310 are denoted by the same symbols as the respective units of the control apparatus 210.

The communication unit 320 receives information on power usage conditions of an interface unit with respect to the Internet, a power line carrier communication apparatus, a wireless communication apparatus, and the commercial power supply 900, that is, "electricity forecast" or "telegraph regarding power cut request (demand)" individually transmitted to a consumer, for example, and transmits the information to the control apparatus 310.

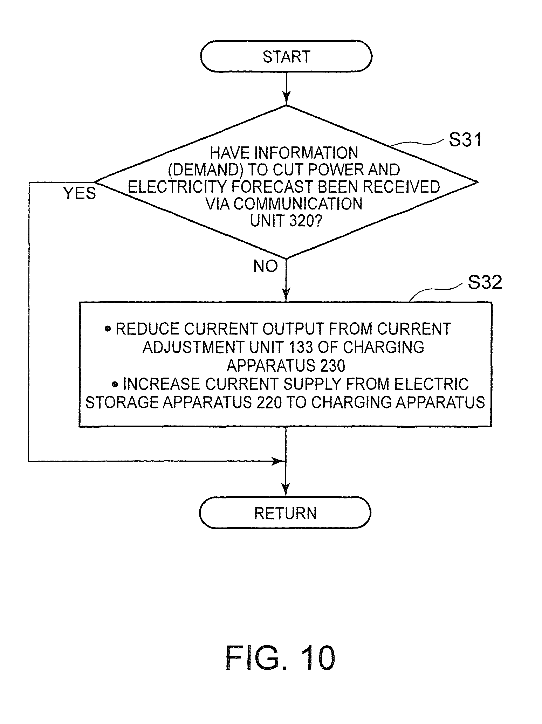

Next, an operation of the electric vehicle charging system structured as described above will be described. In the following descriptions, an operation of the control unit 212 of the control apparatus 310 will mainly be described. Fig. 10 is a flowchart showing charging processing executed by the control unit of the control apparatus of the electric vehicle charging system.

First, it is checked whether information (demand) to cut power and the electricity forecast have been received via the communication unit 320 (Step S31). When the information (demand) to cut power and the electricity forecast have been received, a command to reduce the output current of the current adjustment unit 133 is transmitted to the charging apparatus 230, and a command to increase a current supply to the charging apparatus 230 is transmitted to the electric storage apparatus 220 (Step S32).

As described above, according to the electric vehicle charging system of the third embodiment, since the control unit 212 of the control apparatus 310 transmits the command for controlling charging with respect to the storage battery unit 921 to the charging apparatus 230 and the command for increasing a current supply from the electric storage apparatus 220 to the charging apparatus 230 to the electric storage apparatus 220 based on the information to cut power that has been transmitted from the outside via the communication unit 320, charging with respect to the storage battery unit 921 of each of the electric vehicles 920a and 920b can be controlled appropriately.

### (Fourth embodiment)

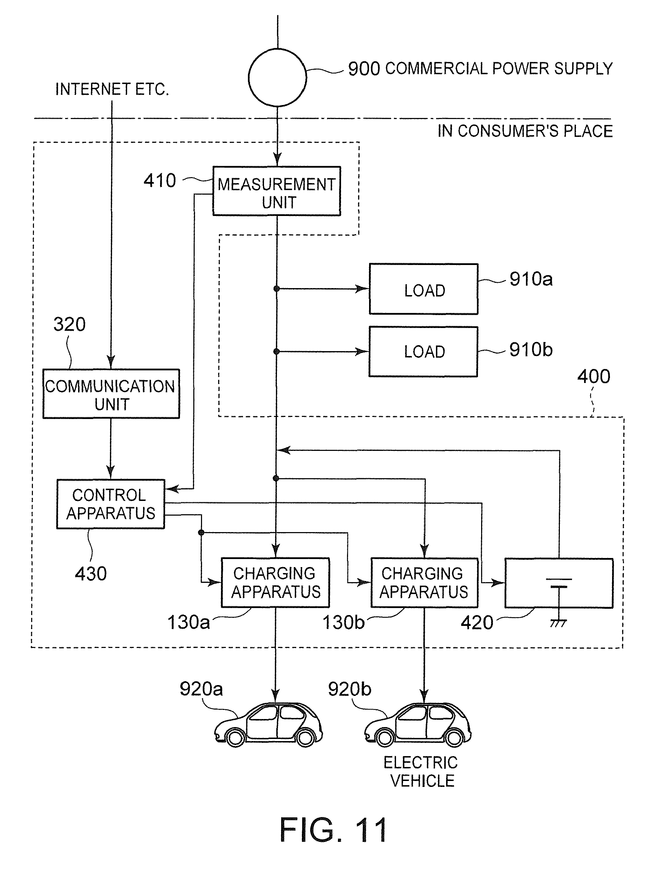

Fig. 11 is a block diagram showing a structure of an electric vehicle charging system according to a fourth embodiment. In an electric vehicle charging system 400 of the fourth embodiment shown in Fig. 11, a measurement unit 410, an electric storage apparatus 420, and a control apparatus 430 differ from those of the electric vehicle charging system 300 of the third embodiment shown in Fig. 9. It should be noted that the control apparatus 430 is different from the control apparatus 210 of the second embodiment only in a program and in that the control apparatus 430 includes an interface circuit with respect to the communication unit 320, and other structures are the same. Therefore, respective units of the control apparatus 430 are denoted by the same symbols as the respective units of the control apparatus 210. Moreover, in place of the charging apparatuses 230a and 230b, the charging apparatuses 130a and 130b are provided as in the first embodiment.

The measurement unit 410 measures power of the loads 910a and 910b at the consumer's place and power to the charging apparatuses 130a and 130b and transmits the measured data to the control apparatus 430. An inverter is mounted on the electric storage apparatus 420 that convers DC into AC and supplies the output to the charging apparatuses 130a and 130b and the loads 910a and 910b.

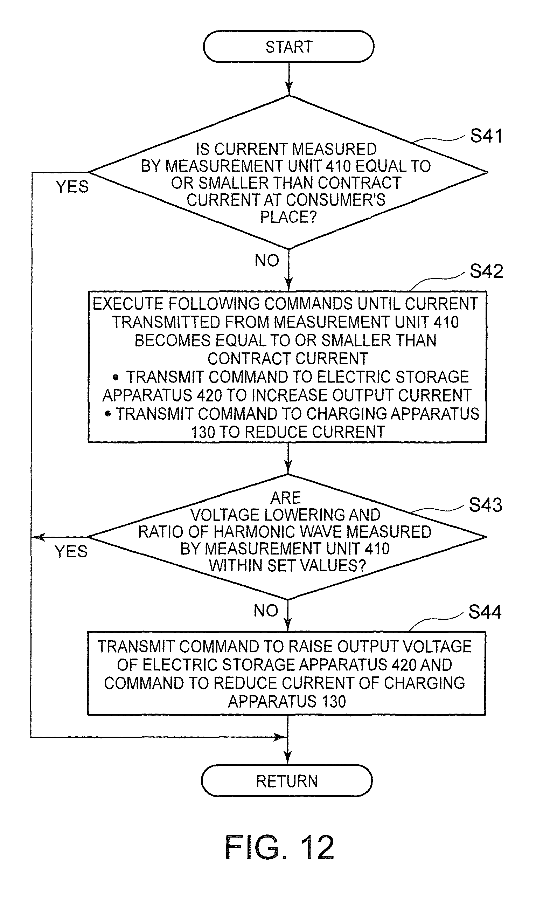

Next, an operation of the electric vehicle charging system structured as described above will be described. In the following descriptions, an operation of the control unit of the control apparatus 430 will mainly be described. Fig. 12 is a flowchart showing charging processing executed by the control unit of the control apparatus 430 of the electric vehicle charging system.

First, a current, a voltage, a ratio of a harmonic wave with respect to a basic wave, and the like supplied from the commercial power supply 900 are measured by the measurement unit 410. Subsequently, the current measured by the measurement unit 410 is checked as to whether it is within a preset current value (Step S41). When the measured current is not within the preset current value, a command to increase an output current is transmitted to the electric storage apparatus 420 until the current value transmitted from the measurement unit 410 becomes equal to or smaller than a contract current. When the measured current still does not fall within the set current value, a command to reduce the output current of the current adjustment unit 133 is transmitted to the charging apparatus 130 (Step S42).

Next, lowering of the voltage and the ratio of the harmonic wave with respect to the basic wave that have been measured by the measurement unit 410 are checked as to whether they are within set values (Step S43). When the voltage lowering and the ratio of the harmonic wave with respect to the basic wave are not within the set values, a command to increase an output voltage is transmitted to the electric storage apparatus 420. When the measured voltage lowering still does not fall within the set voltage value, a command to reduce the output current of the current adjustment unit 133 is transmitted to the charging apparatus 130 (Step S44).

It should be noted that charging with respect to the electric vehicles 920a and 920b may be controlled by performing control so as to increase the output current of the electric storage apparatus 420 in a time slot where the electricity charge of the commercial power supply 900 is expensive.

As described above, according to the electric vehicle charging system of the fourth embodiment, it is possible to measure power in consideration of the power of the loads 910a and 910b at the consumer's place and supply the output of the electric storage apparatus 420 to the charging apparatuses 130a and 130b and the loads 910a and 910b in accordance with the measured power.

### (Fifth embodiment)

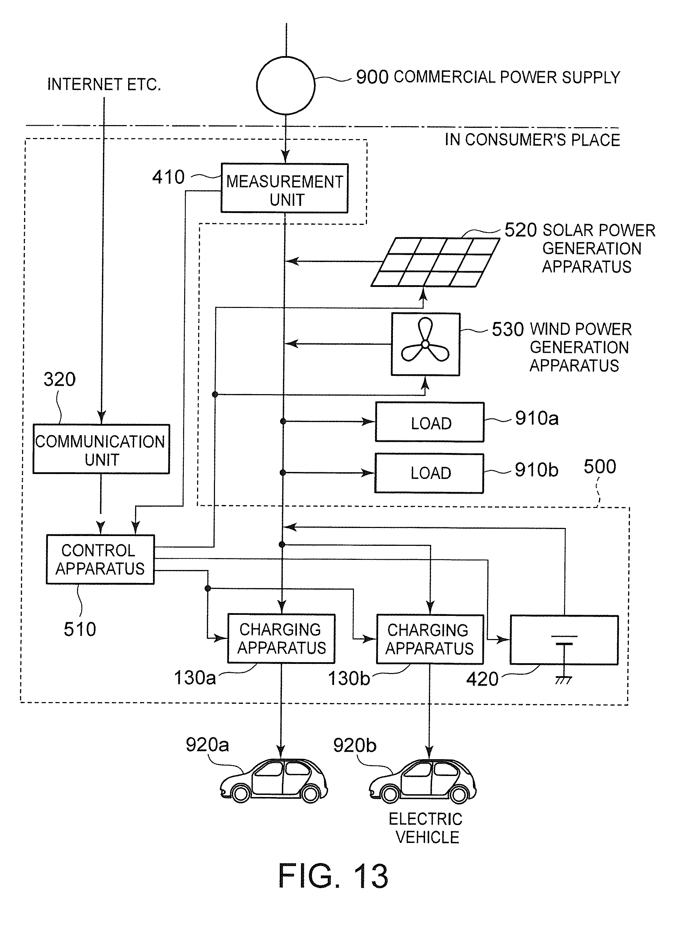

Fig. 13 is a block diagram showing a structure of an electric vehicle charging system according to a fifth embodiment. An electric vehicle charging system 500 of the fifth embodiment shown in Fig. 13 includes, in addition to those of the electric vehicle charging system 400 of the fourth embodiment shown in Fig. 11, a solar power generation apparatus 520 and a wind power generation apparatus 530. It should be noted that only one of the solar power generation apparatus 520 and the wind power generation apparatus 530 may be used instead.

The solar power generation apparatus 520 is also called mega-solar and generates power by a photoelectric conversion and outputs the generated power to the power lines. The wind power generation apparatus 530 generates power by converting wind power into an electricity and outputs the generated power to the power lines. A control apparatus 510 transmits a command to the solar power generation apparatus 520 and the wind power generation apparatus 530 so that power is supplied to the charging apparatuses 130a and 130b.

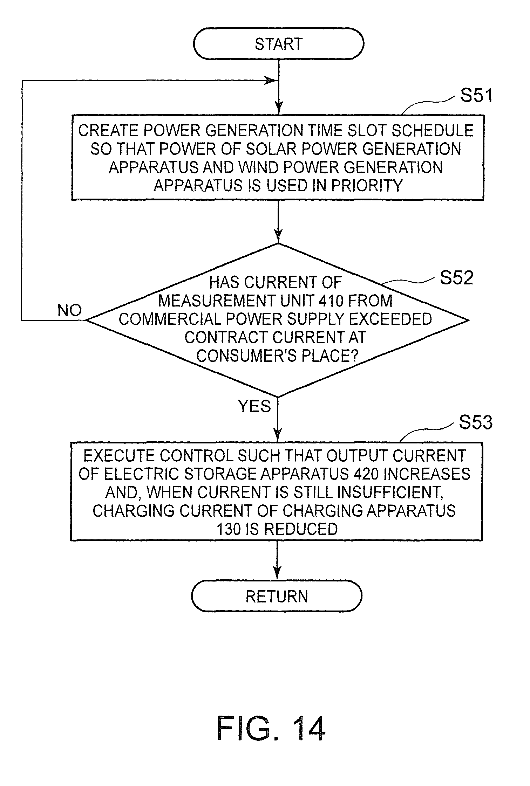

Next, an operation of the electric vehicle charging system structured as described above will be described. In the following descriptions, an operation of the control unit of the control apparatus 510 will mainly be described. Fig. 14 is a flowchart showing charging processing executed by the control unit of the control apparatus of the electric vehicle charging system.

First, a power generation time slot schedule is created so that power of the solar power generation apparatus 520 and the wind power generation apparatus 530 is used in priority (Step S51).

In this case, the control apparatus 510 performs control based on the power generation time slot schedule of the solar power generation apparatus 520 and the wind power generation apparatus 530.

Next, whether the current from the commercial power supply 900 measured by the measurement unit 410 has exceeded a contract current is checked (Step S52). When the current from the commercial power supply 900 has exceeded the contract current of the consumer's place, the control apparatus 510 performs control so as to increase the output current of the electric storage apparatus 420 and, when the current is still insufficient, reduce the charging current of the charging apparatus 130 (Step S53).

As described above, according to the electric vehicle charging system of the fifth embodiment, power of the solar power generation apparatus 520 and the wind power generation apparatus 530 can be used in priority.

While certain embodiments have been described, these embodiments have been presented by way of example only, and are not intended to limit the scope of the inventions. Indeed, the novel methods and systems described herein may be embodied in a variety of the other forms; furthermore, various omissions, substitutions and changes in the form the methods and systems described herein may be made without departing from the sprit of the inventions. The accompanying claims and their equivalents are intended to cover such forms or modifications as would fall within the scope and spirit of the inventions.

## Claims

1. A charging system connected to a power system and a storage battery unit, comprising:
a charging apparatus that charges the storage battery unit;
a measurement unit that measures at least one piece of information on a current, a voltage, and a harmonic wave of the power system; and
a control apparatus that transmits to the charging apparatus, according to the at least one information measured by the measurement unit, a command for controlling charging with respect to the storage battery unit.

2. The charging system according to claim 1,
wherein the control apparatus transmits to the charging apparatus, when the current exceeds a set value, a command to reduce the current to the charging apparatus until the current reaches the set value.

3. The charging system according to claim 1, further comprising
an electric storage apparatus that supplies power to the charging apparatus,
wherein the charging apparatus supplies to the storage battery unit a current obtained by adding the current supplied from the power system and a current supplied from the electric storage apparatus.

4. The charging system according to claim 1,
wherein the control apparatus controls the current from the power system to be equal to or smaller than a preset current value.

5. The charging system according to claim 3,
wherein the control apparatus executes, based on a price of an electricity charge for each time slot, at least one of processing for transmitting to the charging apparatus a command for reducing a current to the charging apparatus and processing for transmitting to the electric storage apparatus a command for increasing a current supply from the electric storage apparatus to the charging apparatus.

6. The charging system according to claim 3, further comprising
a communication unit that receives a power cut instruction from outside,
wherein the control apparatus executes, in response to the power cut instruction received by the communication unit, at least one of processing for transmitting to the charging apparatus a command for reducing a current to the charging apparatus and processing for transmitting to the electric storage apparatus a command for increasing a current supply from the electric storage apparatus to the charging apparatus.

7. The charging system according to claim 5, further comprising
at least one of a solar power generation apparatus and a wind power generation apparatus,
wherein the control apparatus transmits, to at least one of the solar power generation apparatus and the wind power generation apparatus, a command to supply power to the charging apparatus in priority.

8. A charging method, comprising:
charging a storage battery unit by a charging apparatus;
measuring at least one piece of information on a current, a voltage, and a harmonic wave of a power system; and
transmitting to the charging apparatus, according to the at least one information measured in the measuring, a command for controlling charging with respect to the storage battery unit.

9. The charging method according to claim 8,
wherein the transmitting includes transmitting to the charging apparatus, when the current exceeds a set value, a command to reduce the current to the charging apparatus until the current reaches the set value.

10. The charging method according to claim 8,
wherein the charging includes supplying to the storage battery unit a current obtained by adding the current supplied from the power system and a current supplied from an electric storage apparatus that supplies power to the charging apparatus.

11. The charging method according to claim 8,
wherein the transmitting includes controlling the current from the power system to be equal to or smaller than a preset current value.

12. The charging method according to claim 10,
wherein the transmitting includes executing, based on a price of an electricity charge for each time slot, at least one of processing for transmitting to the charging apparatus a command for reducing a current to the charging apparatus and processing for transmitting to the electric storage apparatus a command for increasing a current supply from the electric storage apparatus to the charging apparatus.

13. The charging method according to claim 10, further comprising
receiving a power cut instruction from outside,
wherein the transmitting includes executing, in response to the power cut instruction received in the receiving, at least one of processing for transmitting to the charging apparatus a command for reducing a current to the charging apparatus and processing for transmitting to the electric storage apparatus a command for increasing a current supply from the electric storage apparatus to the charging apparatus.

14. The charging method according to claim 12,
wherein the transmitting includes transmitting, to at least one of a solar power generation apparatus and a wind power generation apparatus, a command to supply power to the charging apparatus in priority.

15. A charging apparatus that charges a storage battery unit, comprising:
a communication unit that receives a command for controlling charging with respect to the storage battery unit based on at least one piece of information on a current, a voltage, and a harmonic wave of a power system; and
a control unit that controls a current to the storage battery unit to take an appropriate value by reducing the current according to the command received by the communication unit.
